# EUROPEAN PATENT SPECIFICATION

(11) **EP 2 122 238 B1**
(45) Date of publication and mention of the grant of the patent: **03.11.2010**
(21) Application number: 08709961.0
(22) Date of filing: 08.02.2008
(51) Int. Cl.: F21V 7/00, G08B 17/08, F21Y 101/02

(54) **LIGHTING DEVICE COMPRISING AT LEAST ONE LED**
BELEUCHTUNGSVORRICHTUNG MIT MINDESTENS EINER EINGEBETTETEN LED
DISPOSITIF D'ÉCLAIRAGE COMPORTANT AU MOINS UNE DEL

(30) Priority: 12.02.2007 EP 07102147
(43) Date of publication of application: 25.11.2009
(73) Proprietor: Koninklijke Philips Electronics N.V., 5621 BA Eindhoven (NL)
(72) Inventor: BOONEKAMP, Erik, NL-5656 AE Eindhoven (NL); VERBRUGH, Stefan, M., NL-5656 AE Eindhoven (NL)
(74) Representative: Bekkers, Joost J.J
(86) International application number: PCT/IB2008/050454
(87) International publication number: WO 2008/099310

(56) References cited:
- EP-A- 1 174 930
- WO-A-2007/057821
- BE-A- 497 181
- US-A- 5 592 578
- US-A1- 2004 141 303

## Description

### FIELD OF THE INVENTION

The present invention relates to a lighting device comprising at least one LED and at least one collimator structure comprising the at least one LED. The invention especially relates to a lighting device comprising a plurality of such structures.

### BACKGROUND OF THE INVENTION

Lighting devices comprising a plurality of light-emitting diodes (LEDs) are known in the art. For instance, WO2006/045897 describes an array of light-emitting devices implemented in a single plate. The light-emitting device comprises a light-emitting diode and a reflecting surface. In this device, the light-emitting diode is adapted to emit a diverging light beam into a direction, and the reflecting surface is adapted to direct light emitted from the light-emitting diode substantially into this direction. Furthermore, US2005/0265029 (WO2005/119314) describes a light-emitting diode array which comprises an array of LEDs mounted on a substrate. The LEDs emit light in a direction which is generally perpendicular to the substrate. An optical sheet is disposed over the LEDs. At least a portion of light entering one side of the optical sheet from the LEDs is guided within the optical sheet in a direction generally parallel to the substrate. Light extraction features direct light from the optical sheet in a generally forward direction. Such an array is useful for several applications, including space lighting, direct information display and backlighting of liquid crystal displays. The light-spreading effect of the optical sheet reduces the amount of black space between LED pixels. US 5,592,578 describes a lighting device comprising the features of the preamble of claim 1.

### OBJECT AND SUMMARY OF THE INVENTION

These prior-art lamps have one or more of the drawbacks that they have a complicated structure or use relatively complicated means to obtain a device that emits light in the required direction. Furthermore, the prior-art devices may not (easily) allow mixing of the light of different LEDs within the device or display unit comprising the array of LEDs.

It is an object of the invention to provide an alternative lighting device which preferably further obviates one or more of the drawbacks described above. In a specific embodiment, it is an object of the invention to provide a lighting device in which glare during use may be substantially absent or extremely low. In yet another specific embodiment, it is an object of the invention to provide a lighting device in which light of different LEDs within the lighting device can be mixed, thereby decreasing, for instance, the effect of "binning" and thus reducing the possible undesired effect, visible to an observer, that different LEDs may have undesired slightly different emission properties, such as especially slightly different colors, and/or allowing the use of LEDs with different colors while the light of the LEDs is well mixed.

According to a first aspect of the invention, a lighting device comprises at least one LED and at least one structure comprising the at least one LED, wherein:
a. the structure has a front face and a back face;
b. the structure further comprises a recess arranged to provide an opening in the front face, the recess having a recess bottom and a recess height, the recess further being arranged to include the LED;
c. the LED is located at the recess bottom of the recess and arranged to emit light through the opening in the front face; and
d. the structure further comprises a slit circumferentially surrounding the recess and providing a truncated conelike element with an edge, wherein the radius (r) of the truncated conelike element is arranged to increase in the direction from the LED to the front face, and wherein the truncated conelike element comprises a transparent material.

Especially, a lighting device is provided wherein the lighting device comprises a plurality of these structures. In this way, a lighting device (or luminaire), for instance, in the form of a light tile, may be provided with, for instance, a two or three-dimensional array of LEDs (or other types or arrangements such as square, hexagonal, random arrangements, or combinations of two or more of these arrangements).

The lighting device according to the invention has the advantage that it is a relatively simple system with relatively few optical components, which allows a high brightness device with substantially no glare. It is further possible to mix the light of different LEDs. It is even possible to obtain a lighting device in which, when in use, the individual LEDs are not visible anymore and the lighting device and its light is experienced as a kind of light tile. Furthermore, it is also possible to tune the amount of light directed to the front face, back face and side face directions.

### BRIEF DESCRIPTION OF THE DRAWINGS

Embodiments of the invention will now be described, by way of example only, with reference to the accompanying schematic drawings in which corresponding reference symbols indicate corresponding parts:
Figures 1a-c are a schematic side view (a), top view (b) and perspective view (c), respectively, of the truncated conelike element used in the lighting device for collimating light of the LED;
Figures 2a-2e schematically depict a number of embodiments (in side views) of the lighting device according to the present invention;
Figure 3 schematically depicts how light rays may travel in the lighting device;
Figures 4a-4b schematically depict embodiments of the lighting device comprising a plurality of LEDs comprised in a plurality of the structures;
Figure 5 depicts the intensity distribution of a single LED (lambertian, 1 lm) installed in a fully transparent LED tile (100x200 mm²) (not shown) comprising 8x4 LED positions as a function of the angle γ (viewing angle) for different angles α (cone angle; see below); the parameter x (see below) is constant in this example;
Figure 6 depicts the flux fraction at the front (triangle), the sides (crosses) and the back (circles) of the above LED tile as a function of the angle α; and
Figure 7 depicts the luminance (cd/m² per 100 lm installed) as a function of the angle α.

### DESCRIPTION OF EMBODIMENTS

The invention provides a lighting device 1 which comprises at least one LED 10. The abbreviation "LED" (light-emitting diode) herein also refers to a plurality of LEDs. For instance, a multicolor LED or a multiLED may be used, which may generate white and/or colored light. The LEDs 10 used in the invention may comprise any known LED, including multicolor LEDs, phosphor-LED combinations (such as a blue LED arranged to illuminate a yellow emitting phosphor coating or a phosphor-containing coating, thereby providing white light), as known to the person skilled in the art. The LED 10 may be, for instance, a top LED or side LED (side-emitting LED). Commercially available LEDs 10, emitting white and/or colored light, may also be used.

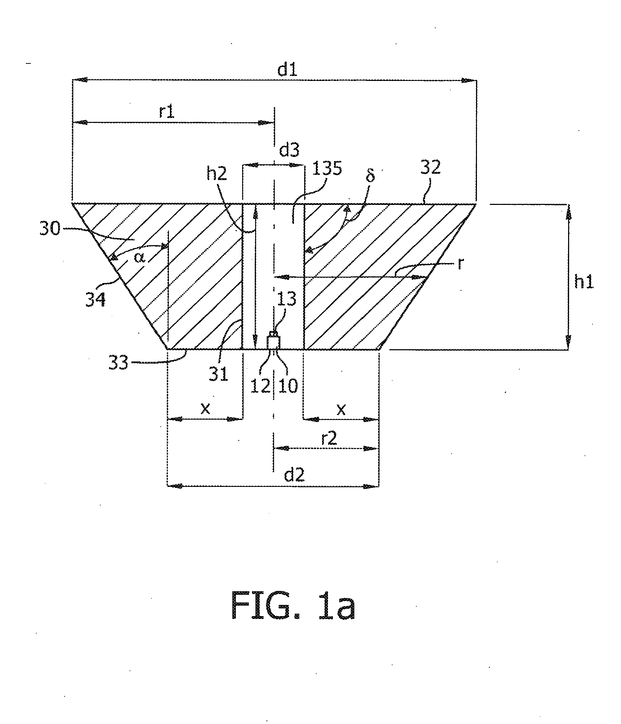

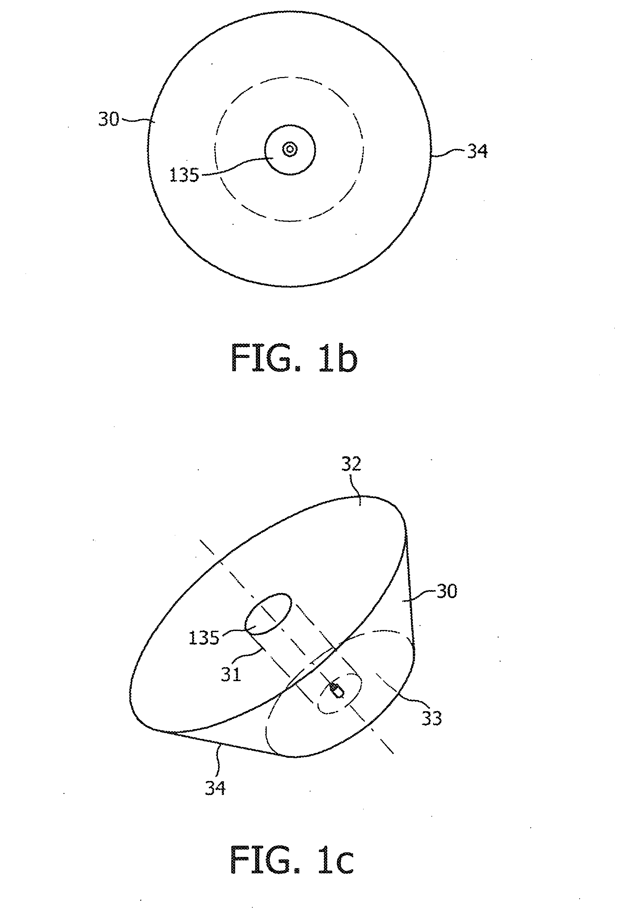

The lighting device is based on a structure unit (see below) comprising LED 10 and a specific collimator 30. This collimator 30 is further also indicated as truncated conelike element 30, or, since it may be a separate body, also as truncated conelike body 300 (see below). In Figures 1a-1c, the truncated conelike element 30 is explained in more detail. The term "truncated cone" is well-known in the art and refers to a cone which has its apex cut off by an intersecting plane. In general, the intersecting plane is parallel to the base. Such a truncated cone is also known as "frustum". In fact, in the embodiments herein described, the truncated conelike element 30 (or body) has the shape of a frustum, i.e. a parallel intersecting plane and base. A truncated cone has a bottom face (base) and a top face (intersecting plane cutting of the apex), wherein the former is larger than the latter, and wherein the radius of the former is larger than that of the latter. However, Figure 1a shows the truncated conelike element 30 drawn upside down, with a bottom face 32 and a top face 33. Furthermore, the truncated conelike element 30 has an edge 34 and a height h1, a smallest diameter d2 at the top face 33 and a largest diameter d1 at the bottom face 32. In the invention, the edge 34 may be curved, straight or facetted, hence, the term "conelike" is used. The edge 34 is preferably curved or straight, more preferably straight. Furthermore, the truncated cone 30 may have a different shape, for instance, both bottom face 32 and top face 33 may have an oval shape, thereby providing a truncated conelike element 30 having an oval shape. It is also for this reason that the term "conelike" is used herein. Other different shapes are also possible. The truncated conelike element 30 is preferably not shaped differently and is a frustum, with optionally a curved or facetted edge 34.

In the schematic Figures 1a-1c, the edge 34 is drawn as a straight edge, but the invention is not limited to such a straight-edged truncated conelike element 30. Here, angle α indicates the angle of edge 34 relative to a normal to the bottom face 32 or top face 33. Angle α will be smaller than 90° and larger than 0°, but is preferably in the range of 10 to 80°, more preferably in the range of 15 to 45°. This allows a relatively narrow light distribution of the LED or LEDs 10, i.e. a good collimation, thereby reducing glare (see also below). The truncated conelike element 30 further has a hole 135, extending from the top face 33 to the bottom face 32, thereby providing openings in bottom face 32 and top face 33. The hole 135 is arranged to include the LED 10, i.e. it has dimensions allowing the LED 10 to be at least partly positioned within the hole 135, preferably allowing the LED to be entirely positioned within hole 135, as schematically indicated in Figure la.

The hole 135 comprises a hole wall 31 with height h2. This hole wall 31 may be straight, curved or facetted. Hole 135 preferably has a cylindrical or also a truncated conelike shape and a diameter d3. In the former case, the diameter d3 is substantially constant throughout height h2 of hole 135; in the latter case, the diameter d3 may vary with height h2, wherein the diameter d3 increases in the direction from the top face 33 to the bottom face 32. The hole wall 31 is preferably perpendicular to the bottom face 32 (and top face 33), i.e. d3 is substantially constant throughout height h2. However, the hole wall 31 may also be arranged at an angle δ relative to a normal to the bottom face 32. The angle δ is preferably in the range of 80 to 100°, more preferably in the range of 90 to 100°. When 90°<δ<180°, also hole wall 31 of hole 135 has a truncated conelike shape.

The truncated conelike element 30 has a varying radius r, with a smaller radius r2 at top face 33 and a larger radius r1 at bottom face 32 (this will also apply to oval-shaped truncated conelike elements 30, as will be clear to the person skilled in the art; the truncated conelike element 30 is herein further depicted as frustum). The radius r of the truncated conelike element 30 is arranged to increase in the direction from the top face 33 to the front face 32. Furthermore, at the top face 33, the truncated conelike element 30 has a distance x from hole wall 31 to edge 34. i.e. the wall width of the truncated conelike element 30 at the top face 33 (see also below).

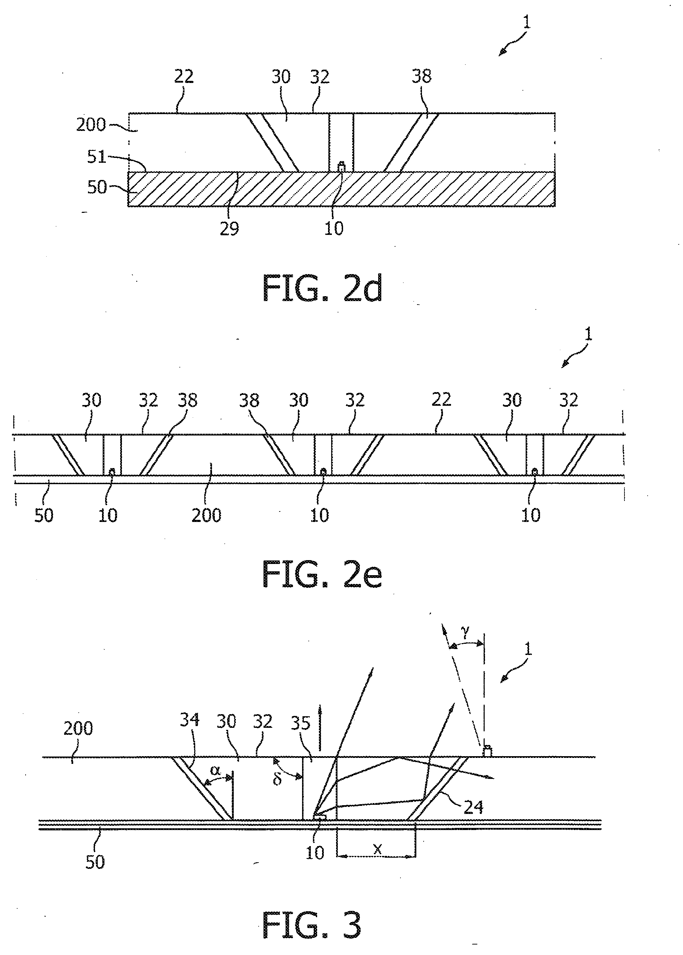

The truncated conelike element 30 in Figure 1a (and 1c) encloses a LED 10. The LED 10 is arranged to emit light in the direction of the opening in bottom face 32. The highest point of the LED in hole 135 is indicated as LED top 13; the lowest point as LED bottom 12. As can be derived from Figures 1a-1c, the depicted arrangement is a LED with a collimator arrangement. Hence, the truncated conelike element 30 is herein also indicated as collimator 30. However, the truncated conelike element 30 is a "massive" collimator with hole 135. The material of the collimator 30 is transparent. Hence, the invention also provides a transparent collimator or truncated conelike element 30 (herein also indicated as truncated conelike body 300, see below). In this way, LED light can escape through hole 135 (and through the opening in the front face 32), but part of the light may also enter the collimator 30 through hole wall 31. Part of the LED light that has entered the collimator 30 may leave the collimator at front face 32, for instance, after reflecting at face 34 (due to total internal reflection (TIR)). However, part of the LED light that enters the collimator 30 may also leave the collimator 30 at face 34. This is further shown in Figure 3, see below. Hence, the collimator or truncated conelike element 30 is transparent, i.e. it essentially consists of a (substantially) transparent material.

Transparent materials which can be used may be selected, for instance, from the group of glass, polymethyl acrylate (PMA), polymethyl methacrylate (PMMA) (Plexiglas or Perspex), cellulose acetate butyrate (CAB), polycarbonate (PC), polyvinyl chloride (PVC), polyethylene terephthalate (PET), and glycol-modified polyethylene terephthalate (PETG). In another embodiment, the material comprises an acrylate, for instance, PMA or PMMA, especially PMMA. Such materials are also known in the art as transparent plastics. In yet another embodiment, the material comprises transparent plastics commercially known as PERSPEX^{™} or PRISMEX^{™}. Other substantially transparent materials known to the person skilled in the art may also be used. Combinations of two (or more) materials may be used. The term "transparent" is herein understood by the person skilled in the art and refers in a specific embodiment to materials which transmit at least 70%, preferably at least 80%, more preferably at least 90%, even more preferably at least 95% of the visible light of the LED 10 when a 1-cm thick transparent material is irradiated perpendicularly with this LED light.

The LED 10 is arranged to provide light, which may be white light or colored light (or both, for instance, in the case of a multiLED). The lighting device 1 may also be arranged to provide white light or colored light or both. The term "light" herein especially refers to visible radiation (VIS), i.e. radiation in the range of about 380 to 780 nm. In an embodiment, the light generated by the one or more LEDs 10 comprises white radiation (i.e. white light), although in another embodiment one or more of these LEDs 10 may also produce colored light.

Subsequent to the above description of the truncated conelike element or collimator 30 and LED 10, the device 1 will now be described in more detail.

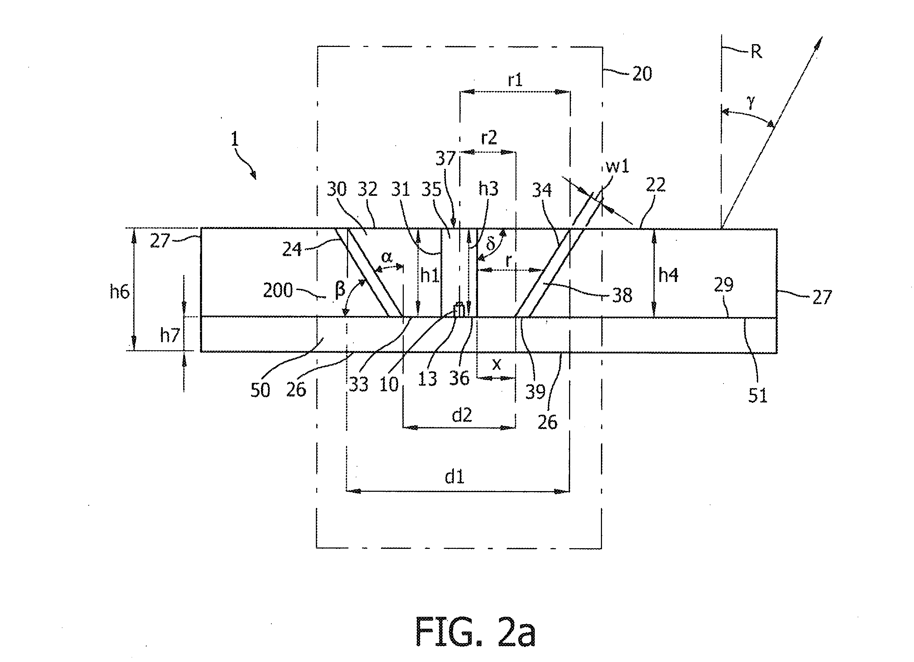

Figure 2a schematically shows an embodiment of the device 1 of the invention. It is to be noted that the device 1 may be larger and comprise more LEDs 10 and collimators 30, see also below. Peripheral equipment, such as ballasts, suspension systems, wall fixings, etc., known to the person skilled in the art, is not shown.

The lighting device 1 in Figure 2a comprises a main body 200 and a carrier 50, comprising the LED 10 and collimator 30. The carrier 50 is arranged to carry the LED 10, i.e. the LED 10 is located on the carrier 50. The main body 200 comprises collimator 30. The main body 200 has a front face 22 and a back face 29; the carrier 50 has a top face 51 and a bottom face 26. The top face 51 of carrier 50 and the back face 29 of main body 200 are attached to each other. Both the main body 200 and carrier 50 are preferably plates. The carrier 50 has a height h7; the device 10 has a height h6.

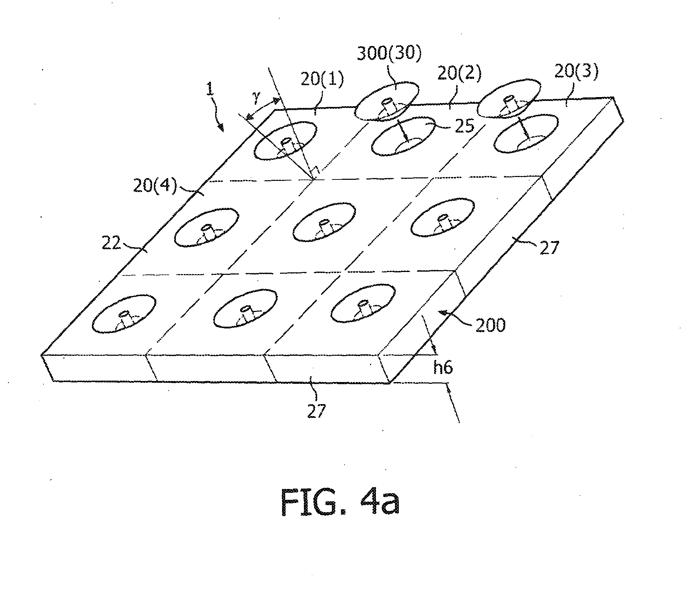

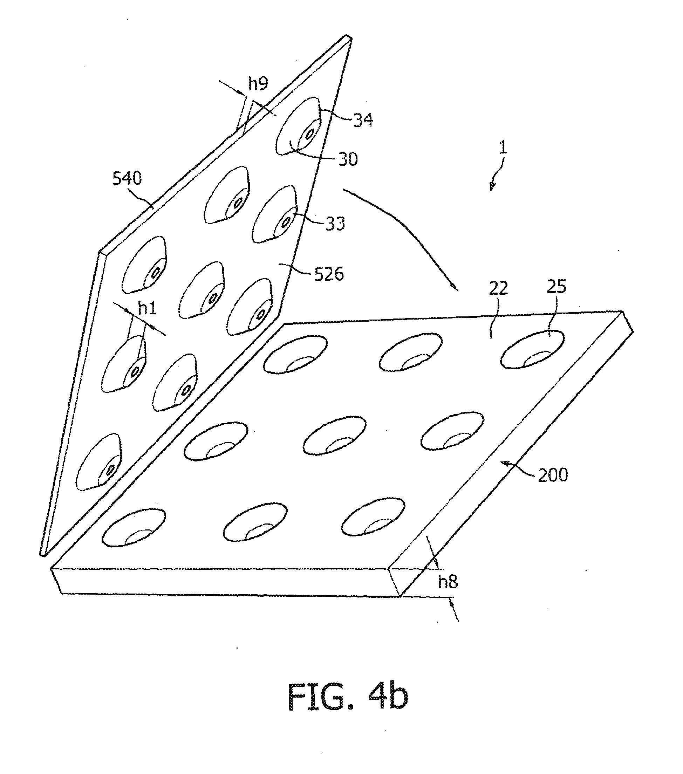

As can be seen from the Figure, the lighting device 1 according to the invention comprises at least one LED 10 and at least one structure 20 comprising the at least one LED 10. The at least one structure 20 can be indicated as basic structure, structure unit or elementary unit, which may be iterated, i.e. the lighting device 1 may comprise one or more of these structures 20. An example thereof is shown in Figures 2e, 4a and 4b. The structure has front face 22 and back face 26 and further comprises a recess 35 arranged to provide an opening 37 in the front face 22. In the description above of the collimator 30, a hole 135 was described. Here, the hole has a recess bottom 36, wherein the LED 10 is arranged. In general, recess bottom 36 will be part of a top face 51 of carrier 50. Hence, the hole 135 in truncated conelike element 30 is indicated as recess 35. The term "recess" refers to the construction wherein, relative to surface 22, a deepening is provided. The recess 35 has a recess bottom 36 and a height h3 (see also above). Note that in Figures 1a-1c, the hole 135, comparable to the recess 35 here, has a height h2, here height h3.

As mentioned above, the recess 35 is further arranged to include the LED 10. This means that the dimensions of the recesses 35 are chosen to allow inclusion of the LED 10. Height h3 of recess 35 is preferably high enough to have the LED arranged in a "sunken" way, relative to front face 22 of device 1, i.e. the top 13 of the LED 10 is (well) below the front face 22. The LED 10 is located at the recess bottom 36 of the recess 35 and is arranged to emit light through the opening 37 in the front face 22: the carrier 50 and main body 200 are attached to each other and arranged to allow the LED 10 to emit light through the opening 37 in the front face 22 (of main body 200). Hence, in an embodiment of the invention, the device 1 comprises main body 200 and carrier 50, wherein the main body 200 and the carrier 50 comprise the at least one structure 20, and the carrier 50 is arranged to carry the LED 10, while the main body 200 comprises the truncated conelike element 30.

Here, the recess 35 has a recess wall, also denoted by reference numeral 31. As mentioned above, an individual LED 10 may also comprise one or more LEDs, such as a multiLED or a multicolor LED. Preferably, the recess 35 substantially has the shape of a cylinder, i.e. d3 is substantially constant throughout height h3 (see also above). In the embodiments described in more detail and schematically depicted herein, the recess 35 has the shape of a cylinder.

As depicted in Figure 1a, the truncated conelike element 30 has substantially the same height h1 as the height h2 of hole 135. In Figure 2a, etc., height h3 of the recess 35 may in principle be larger or smaller than height h1 of truncated conelike element 30. Hence, this height is denoted by reference h3. However, it is preferable that h1 and h3 are substantially the same. In the embodiments described in more detail and schematically depicted herein, h3=h1. In a preferred embodiment, h3=h1 (i.e. the recess height h3 is equal to the collimator height h1 of truncated conelike element 30).

The structure 20 further comprises a slit 38 circumferentially surrounding the recess 35 and providing a truncated conelike element 30 with edge 34, wherein the radius r of the truncated conelike element 30 is arranged to increase in the direction from the LED 10 to the front face 22 (i.e. in the direction from the top face 33 to the bottom face 32). The radius r will generally be in the range of about 1.5 mm (r2) to about 25 mm (r1) (see also Figure 1a).

Actually, the presence of this slit 38 leads to the presence of the truncated conelike element 30: the slit 38 has a slit height h4 (i.e. penetration depth into main body 200, calculated from the front face 22), and the slit height h4 is equal to height h 1 of truncated conelike element 30. The slit height h4 is preferably of the order of the recess height h3. In the embodiments described in more detail and schematically depicted herein, h4=h1=h3.

The slit 38 has width w1, which may in principle vary. The slit width w1 is preferably at least about 10 µm or larger, for instance, in the range of 10 to 1000 µm. Furthermore, the slit has an internal surface 34, i.e. the edge of truncated conelike element 30, and an outer surface 24, i.e. wall 24 (see also below). Both walls 34 and 24 may be independently curved, facetted or straight. For instance, wall 34 (and/or wall 24) may be curved for further fine-tuning of the beam shape of the light. In the schematic Figures, angle α, i.e. the angle of edge 34 relative to a normal to front face 22 of device 1 (or as mentioned above, relative to a normal to bottom face 32 of truncated conelike element 30), and angle β, the angle of edge 24 relative to a normal to front face 22 of device 1 is chosen as α+β=90°. However, α+β may also be smaller than 90°, i.e. the width w1 of slit 38 increases with an increasing distance from bottom 39 of slit 38: the width of slit 38 is larger at the front face 22 than deeper in main body 200. In a preferred embodiment, the edge 34 is a straight edge 34, wherein the angle α relative to said normal is in the range of 15 to 45°. In a further preferred embodiment, both edges 34 (collimator edge) and 24 (collimator recess edge), i.e. the edges of slit 38, are straight and α+β=90° (i.e. straight parallel edges 34 and 24), i.e. the width w1 of the slit 38 is constant over height h4 of slit 38. In the embodiments described in more detail and schematically depicted herein, the slit 38 is straight and has a constant slit width w1. In a preferred embodiment, h4=h3 (in fact, h1=h3). In a further preferred embodiment, the slit 38 has a constant slit width w1. Slit bottom 39 will thus generally be a part of top face 51 of carrier 50.

In a specific embodiment, bottom face 32, i.e. the face through which at least part of the LED light may exit from the device 1 may be curved or facetted. For instance, bottom face 32 may be hollow (concave) relative to front face 22 or globular (convex) relative to front face 22. In this way, the light beam of the LED or LEDs 10 may be further shaped. In a preferred embodiment, however, bottom face 32 is flat relative to front face 22 (i.e. these faces are substantially parallel, preferably substantially in the same plane).

The slit 38 is preferably filled with a material having an index of refraction which is different from that of the material of the truncated conelike element 30. The slit 38 is preferably filled with air. The truncated conelike element 30 comprises a transparent material (see also above), or preferably essentially consists of a transparent material.

As mentioned above, preferably δ=90° (i.e. recess 35 has the shape of a cylinder). In preferred embodiments, h4=h3=h1 and α=β. In a preferred embodiment, 10°≤α≤80°, more preferably 15°≤α≤45°. This yields a useful performance, i.e. a narrow beam keeping glare low or substantially absent. In a further preferred embodiment, 0<r2/h1≤2, preferably 0<r2/h1≤1. Preferably, r2/h1 is at least 0.1. In a further preferred embodiment, 0<d3/h1≤1, more preferably 0<d3/h1≤0.5. Preferably, d3/h1 is at least 0.02. In yet a further preferred embodiment, 0<r1/h1≤8, preferably 0<r1/h1≤2. Preferably, r1/h1 is at least 0.2.

In a preferred embodiment, δ=90°, h4=h3=h1, α=β, 10°≤α<80°, 0<r2/h1≤2, 0<r1/h1≤8, and 0<d3/h1≤1, preferably 15°≤α≤45°, 0<r2/h1≤1, 0<r1/h1≤2 and 0<d3/h1≤0.5. Especially under these conditions, well-collimated beams are obtained, without substantial glare.

In one embodiment, recess height h3 is in the range of 1 to 25 mm, preferably in the range of 1 to 10 mm. The recess diameter d3 is preferably in the range of 0.5 to 10 mm. In another embodiment, the shortest distance x between the recess wall 31 and the edge 34 of the truncated conelike element 30 is in the range of 0.5 to 25 mm.

Hence, the structure 20 has front face 22 and back face 26 and comprises recess 35 arranged to provide opening 37 in the front face 22, the recess 35 having recess bottom 36 and height h3 and being further arranged to include the LED 10. The LED 10 in the structure is located at the recess bottom 36 of the recess 35 and is arranged to emit light through the opening 37 in the front face 22. The structure 20 further comprises slit 38 circumferentially surrounding recess 35 and providing truncated conelike element 30 (the collimator) with edge 34, wherein the radius r of the truncated conelike element 30 is arranged to increase in the direction from the LED 10 to front face 22, and the truncated conelike element 30 comprises a transparent material.

This structure 20 may be iterated, i.e. the device of the invention may comprise one or more structures 20. For instance, such a device may comprise 2 to 1000 structures, i.e. 2 to 1000 LEDs 10 arranged in 2 to 1000 truncated conelike elements or collimators 30, respectively, wherein the truncated conelike elements or collimators 30 comprise a transparent material. In this way, devices 1 may be obtained, comprising main body 200, carrier 50, front face 20, back face 26 and edges 27, the device 1 further comprising a plurality of structures 20, for instance, at least sixteen structures. Examples of such devices are schematically shown in Figures 2e, 4a and 4b. Also the main body 200 preferably comprises a transparent material (see below).

When producing the device 1 according to the invention, especially by selecting parameters such as α, β, δ, d3, h3, h1 (i.e. h4) and the type of material of the main body 200 and the truncated conelike element 30, the beam shape of the light escaping from device 1 can be tuned. Desired beam shapes, cut-off angles (see below), etc. can then be obtained in a relatively simple way. The device 1 of the invention allows radiation of the LED or LEDs 10 in a direction generally perpendicular to the front face 22.

Figure 2a further shows the device having front face 22, back face 26 and edges 27. Main body 200 of device 1 preferably also comprises a transparent material, which may be the same as or different from the transparent material of the truncated conelike element 30. In this way, the device may act as a waveguide. Therefore, an embodiment of the device 1 comprises main body 200 which consists of a substantially transparent material. Furthermore, an edge or edges 27 may comprise a reflective material. For instance, an edge or edges 27 may be coated with a reflective material, chosen to reflect at least part of the (visible) light of the at least one LED 10. In another embodiment, back face 29 may (also) comprise a reflective material. Back face 29 may be coated with a reflective material, chosen to reflect the (visible) light of the at least one LED 10. Alternatively or in addition, top face 51 of carrier 50 may be provided with a reflective material, such as a reflective coating, to reflect at least part of the (visible) light of the at least one LED 1.

The device 1 preferably comprises a plate, such as a circular, square or rectangular plate, with front face 22, back face 26 and edge or edges 27, wherein the faces and edge or edges are preferably arranged at substantially right angles to each other. The width/height of the device is denoted by reference h6. The height h6 will generally be in the range of 2 to 30 mm. In this way, a light tile may be obtained. This light tile comprises the at least one LED 10 and the at least one collimator 30, respectively, i.e. the light tile comprises at least one structure 20.

The truncated conelike element 30 may be an integral part of main body 200. Indeed, this is possible, and a recess or recesses 35 and a slit or slits are obtainable, for instance, by laser cutting or other methods known in the art. Hence, in a specific embodiment, one or more of the recesses 35 and slits 38 are obtainable by laser cutting one or more recesses 35 and slits 38 in main body 200 of device 1. In this way, the device as defined in claim 1 can be obtained.

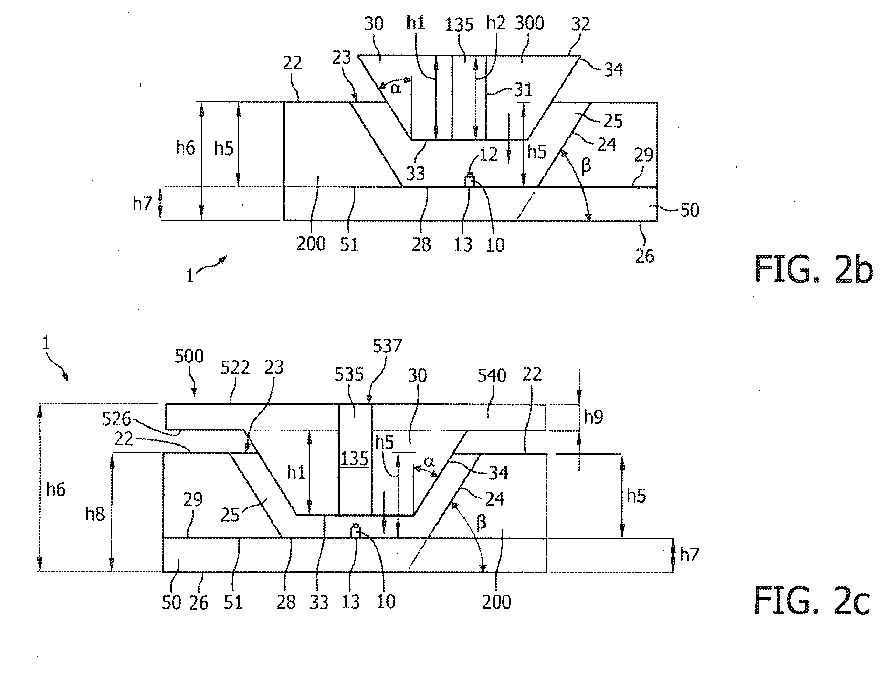

However, also other methods are possible. Figures 2b and 2c schematically depict other possible methods of obtaining the device 1 of the invention.

In Figure 2b, main body 200 comprises a collimator recess 25 having a similar shape as the truncated conelike element 30 which is here indicated as separate body 300, and arranged to receive this collimator 300. The term "separate" is used to distinguish embodiments, in which the truncated conelike element 30 is an integral part of main body 200 (or of a second body, see below), from embodiments in which the collimator or truncated conelike element 30 is a separate body that is introduced into the main body 200.

Hence, in a specific embodiment, the lighting device 1 comprises main body 200, carrier 50, and at least one truncated conelike element 30 as separate body 300 which comprises bottom surface 32, top surface 33 and edge 34 and further comprises hole 135 extending from the top surface 33 to the bottom surface 32, the hole 135 being arranged to include the LED 10. The main body 200 comprises at least one collimator recess 25 arranged to provide an opening 23 in the front face 22, the collimator recess 25 having a collimator recess bottom 28 and a height h5 and being arranged to receive the truncated conelike body 300. The LED 10 is located at the collimator recess bottom 28 and arranged to emit light through hole 135 (after assembly), and the lighting device 1 is obtainable by arranging the truncated conelike body 300 in the collimator recess 25 in the main body 200 in a male-female configuration. Figure 2b shows this by way of the arrow, with the "male" truncated conelike element 30 as separate body 300 being arranged in the "female" main body, i.e. in the collimator recess. It is preferable that the collimator recess 25 has substantially the same height h5 as the height h1 of the collimator or truncated conelike body 300. In this way, a substantially flat front face 22 is provided, while the bottom face of the truncated conelike body 300 is at the same height as the rest of the front face 22. By arranging the truncated conelike body 300 in the collimator recess 25 in the main body 200 in a male-female configuration, also the device as defined in claim 1 is obtained. In the embodiments described in more detail and schematically depicted, h5=h1 (i.e. the collimator recess height is substantially equal to the height of truncated conelike element 30).

Another embodiment of the device 1 (and method of assembly) of the invention is schematically depicted in Figure 2c. Here, the main body 200 may be covered by a second body 500 comprising cover 540 which further comprises the truncated conelike element 30 as a kind of protrusion to the cover. The hole 135 preferably extends into the cover 500, thereby providing an extended hole 535. Hence, in yet another embodiment, a lighting device 1 is provided which further comprises a second body 500 having a cover 540 with a front face 522 and a back face 526, wherein the cover 540 is arranged to cover at least part of the main body 200, the second body 500 further comprises a protruding truncated conelike element 30 with edge 34 and top surface 33, the cover 540 comprises hole 535 extending from the front face 522 of the cover 540 to the top surface 33 of the protruding truncated conelike element 30, and the hole 535 is arranged to include the LED 10. Furthermore, the main body 200 comprises collimator recess 25 arranged to provide an opening 23 in the front face 22, wherein the collimator recess 25 has collimator recess bottom 28 and recess height h5, and the collimator recess 25 is arranged to receive the protruding truncated conelike element 30 from second body 500. The LED 10 is located at the recess bottom 28 of the collimator recess 25 and is arranged to emit light through hole 535 (and through opening 537 in cover 540) (after assembly). This lighting device 1 is obtainable by arranging the second body 500 comprising the protruding truncated conelike element 30 and the main body 200, comprising the collimator recess 25 in a male-female configuration. The second body 500 is preferably transparent, i.e. it comprises a transparent material, or is preferably made of a transparent material, at least in the area between truncated conelike element 30 and cover surface 522. The whole second body 500 is preferably a transparent body made of a transparent material. In a preferred embodiment, truncated conelike element 30, second body 500 as well as optional cover 540 essentially consist of the same material, such as PMMA. However, the materials of the truncated conelike element 30, second body 500 and optional cover 540 may also differ from each other, such as, for instance, truncated conelike element 30, which is made of glass, and the main body 200 which is made of PC.

In this embodiment, the main body 200 may be substantially covered by second body 500, i.e. cover 540. The total height of the device is again h6, which in this embodiment may be substantially equal to the sum of the height of the main body, in this embodiment denoted as h8, and a height h9 of cover 540 (i.e. h6≈h8+h9). This may lead to a configuration in which front face 22 and bottom face 526 are substantially in contact which each other. Second body 500 may be one single body, but may also be a cover 540 on which truncated conelike element or elements 30 are arranged. For instance, cover 540 and front face main body 200 may be glued to each other.

Note that, after assembly, the edge or edges 34 and the edge or edges 24 define the slit or slits 38, i.e. there is a distance between these edges (w1, see above).

In the two general embodiments described hereinbefore and schematically depicted in Figures 2b and 2c, the LED 10 will generally be arranged at the collimator recess 25 before assembling the truncated conelike element 300 or the second body 500, respectively, to main body 200. In general, collimator recess bottom 28 will be part of a top face 51 of carrier 50.

Hence, a method of producing or assembling the device 1 of the invention will generally comprise the steps of providing a carrier 50 (such as a PCB) with the LED or LEDs 10, arranging the main body 200 on the carrier 50, wherein the main body comprises a collimator recess or recesses or wherein a collimator recess or recesses 25 are provided, subsequently followed by arranging the truncated conelike element 30 in the collimator recess or recesses 25, either as separate body 300 (i.e. truncated conelike element 300) or as part of second body 500, as described above. The device of the invention as defined in claim 1 may be realized in this way. The truncated conelike element 300, or the second body 500, respectively, may be attached to the main body 200 by means of, for instance, glue, such as UV glue, or other means known to the person skilled in the art, such as local melting by means of a laser. Lighting device 1 is realized in this way, and comprises main body 200 and carrier 50, wherein the main body 200 comprises the at least one LED 10 and the at least one collimator or truncated conelike element 30, respectively. Three-dimensional arrays of the embodiments schematically depicted in Figures 2b and 2c are shown in Figures 4a and 4b, respectively. The truncated conelike element 300, the second body 500, and main body 200 are obtainable, for instance, by injection molding, for instance, of PMMA.

The LED 10 may be directly connected to carrier 50 such as a printed circuit board (PCB). An example of such an embodiment is schematically depicted in Figure 2d. Here, the carrier, such as a PCB, is denoted by reference numeral 50. Such a carrier 50 may be non-transparent. The device 1 of Figure 2d may be obtained by arranging main body 200 on the carrier 50 with LED or LEDs 10 and then truncated conelike element 300 on the carrier 50 with LED or LEDs 10 (see also Figure 2b), as described above. In another embodiment, such a device may also be obtained by arranging main body 200 and second body 500, respectively, on the carrier 50 with LED or LEDs 10 (see also Figure 2c), as described above. A reflective layer (not shown), which is reflective to at least the visible light of the LED 10, may be arranged between carrier 50 and main body 200. Such a layer may be a coating on bottom face 29 and/or top face 51 of carrier 50. For instance, a (specularly) reflective coating or sheet (or foil) between body 200 and carrier 50 may be applied. As will be clear to the person skilled in the art, a sheet or foil may have perforations for the LEDs 10.

Carrier 50 may also be transparent and consist of a transparent material as described above. The carrier 50 is preferably rigid.

Figure 2e is a schematic side view of an embodiment of lighting device 1 according to the invention, wherein an array of LEDs 10 is used, each LED 10 being arranged in a collimator 30. This Figure shows the lighting device with three structures 20. The lighting device 1 comprises main body 200 with a plurality of structures 20 (here, by way of non-limiting example, three structures 20). The material of body 200 is preferably transparent. In this way, the material between slits 38 of adjacent structures 20 is transparent, thereby allowing at least part of the light to travel through body 200 (see also below). Hence, in an embodiment, body 200 is a waveguide which is transparent to the visible light from at least one of the LEDs 10.

Main body 200, truncated conelike element 300 and second body 500 are obtainable, for instance, by injection molding, which is a technique known to the person skilled in the art.

Figure 3 schematically depicts how light rays of LED light may travel within the device 1, wherein the collimator 30 and body 200 are made of a transparent material. Direct light escapes through hole 35, but part of the light may also be collimated in collimator or truncated conelike element 30 and then escape from device 1. However, part of the light may also leave collimator 30 and enter main body 200. This light may travel to another collimator (not shown in this Figure), and escape from device 200 at this other collimator 30. In order to promote this effect, in an embodiment the edge or edges 34 of the truncated conelike element or elements 30 have an anti-reflex coating. The effect that at least part of the light of the LED 10 does enter main body 200 and travels through the body ("waveguide") to another collimator 30 has the advantage that light of different LEDs 10 is mixed, thereby providing mixed light and reducing the undesired effect of "binning". Furthermore, if color mixing is required, the use of a transparent main body, optionally an anti-reflex coating on edge or edges 34, and also optionally anti-reflex coatings on edge or edges 24 may allow such color mixing.

Figures 4a and 4b show embodiments of the device I of the invention with a three-dimensional array of structures 20, denoted as structures 20(1), 20(2), 20(3),... etc. This device may be a light tile, especially when also the material of the main body 200 is transparent (transparent light tile), i.e. made of a transparent material. The structures, i.e. the truncated conelike elements 30 and LEDs 10 therein may be arranged in a regular or irregular pattern or a combination of regular and irregular patterns. Such a device may be obtained, for instance, by integrating LEDs on a (transparent) carrier 50 (such as a PCB) (not shown), arranging the main body 200 on the carrier and arranging the truncated conelike element 300 or second body 500 in a male-female configuration on the main body with collimator recesses 25 (Figures 4a and 4b, respectively). In a preferred embodiment, the LEDs 10 are arranged on a PCB and the optics, i.e. main body 200 (transparent) and the truncated conelike body 300 as depicted in Figures 2d and 2e are arranged on top of it. The embodiments schematically depicted in Figures 2e, 4a and 4b show lighting devices 1 comprising a plurality of structures 20. Hence, the invention may provide lighting device 1 as a transparent LED tile (the optional carrier 50, LED or LEDs 10 and optional reflective coatings not included), comprising a plurality of LEDs 10 arranged in transparent truncated conelike elements or collimators 30 embedded in the light tile.

The pitch p of the LEDs 10 in a lighting device comprising a plurality of structures 20, i.e. the distance between the centers of two neighboring LEDs is preferably 2*r1<p<10*r1.

As mentioned above, the device I of the invention allows light distributions with desired angular distributions, based on selecting parameters such as α, β, δ, d3, h3, h1 (i.e. h4) and the type of transparent material (such as PMMA, PC, glass). In a preferred embodiment, the lighting device 1 is arranged to provide a luminance of ≤ 1000 cd/m² at γ ≥ 65° relative to a normal to the front face 22 (and thus, at angles γ < 65°, a luminance of > 1000 Cd/m²). Angle γ is the viewing angle and is the angle relative to a normal to the front face 22 of lighting device 1. In this way, a substantially glare-free device 1 can be obtained, suitable for office lighting or other purposes. A luminance of ≤ 1000 Cd/m² at γ ≥ 60° is preferably obtained. The angle γ beyond which a luminance of ≤ 1000 cd/m² is experienced (i.e. beyond which no direct light is emitted) refers to the cut-off angle. The term cut-off angle is known to the person skilled in the art and refers to the angle formed by a line drawn from the direction of the direct light at the LED with respect to a vertical beyond which no direct light is emitted. The phrase "beyond which no direct light is emitted" is to be understood in the sense of European Standard EN I 12464-I (-SC/02168, revised December 11, 2002), wherein the limit is set at a luminance of ≤ 1000 cd/m².

The device 1 or luminaire schematically depicted in Figures 4a and 4b allows light with the desired angular distribution, for instance, fulfilling glare standards, allows color mixing, reduces binning and may surprisingly also provide a lighting device wherein the individual LEDs are not observed anymore as individual sources, i.e. a kind of light tile is obtained.

The lighting device 1 may further comprise a controller (not shown) for controlling the light intensity and optionally the color of one or more LEDs 10. This may include controlling the intensity or color of individual LEDs of a plurality of LEDs. The controller may be an "only hardware" system with, for instance, switches such as touch controls, slide switches, etc. to control the intensity of LEDs 10 or to select the desired color, dependent on the application of lighting device 1, the user's mood, etc. Furthermore, the intensity and/or color of LEDs 10 may be dependent on external parameters such as time, temperature, light intensity of external sources (such as the sun), which may be measured by sensors (not shown). The controller may be operated via a remote control. The controller may control the intensity of one or more LEDs 10. In yet another embodiment, the controller may comprise a memory with executable instructions, an input-output unit, configured to (i) receive one or more input signals from one or more groups of (1) one or more sensors and (2) a user input device and (ii) send one or more output signals to control the intensity and/or color of one or more LEDs 10; and a processor designed to process the one or more input signals into one or more output signals based on the executable instructions. The controller may provide one or more functions selected from the group of switching one or more LEDs 10 on and off; determining the intensity of light of one or more LEDs 10; determining the color of light of one or more LEDs 10; determining whether or not one or more of the color or intensity of light of one or more LEDs 10 are dependent on one or more external parameters such as time, temperature, light intensity of external sources, etc.

The device 1 of the invention can be used for several applications, including direct information display and backlighting of liquid crystal displays, general lighting, office lighting, task lighting, spot lighting, etc.

### Example 1:

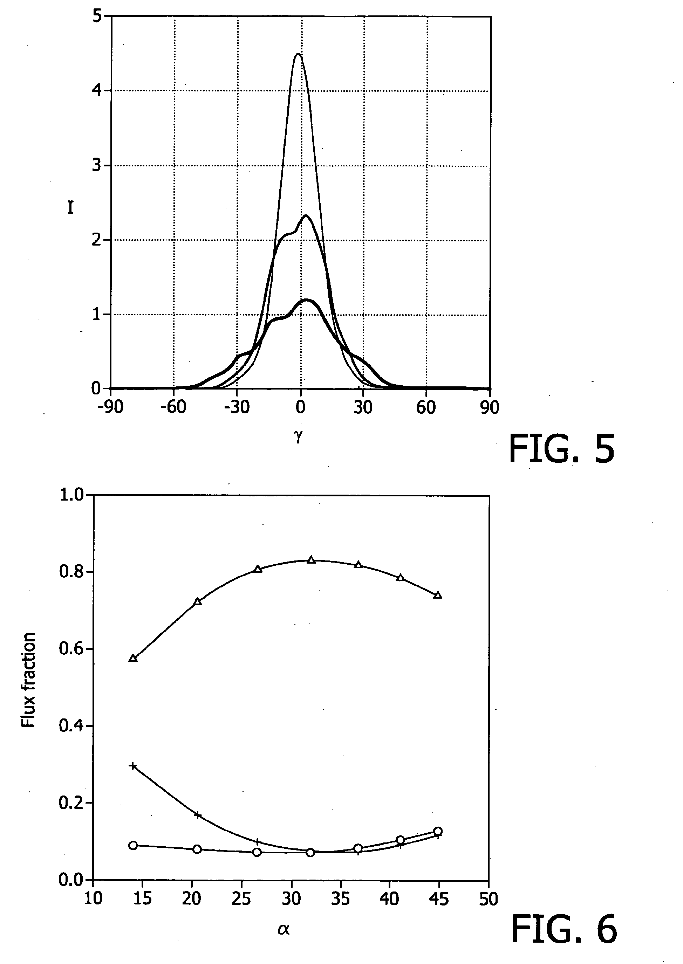

Figure 5 shows the intensity distribution of a single LED (lambertian, 1 lm) installed in a fully transparent LED tile (100x200 mm², thickness h1=h3(h2)=h4=h5=8 mm) having 8x4 LED positions. A truncated conelike element 30 was used as separate body 300 embedded in main body 200, as described above. A cone 30 with straight edges 34 was used; edges 24 were also straight; and a constant slit width w1 (approximately 100 µm) was applied; furthermore, recess 35 was cylindrical (as shown in the Figures). The length x was selected to be 3 mm, and α was varied. The upper curve shows the intensity as a function of γ (viewing angle) with α 32° (r2/h1=0.375; h1=h3=h4; r1/h=1.000), the lower curve (two maxima) with α 36.9° (r2/h1=0.375; h1=h3=h4; r1/h=1.125) and the lowest curve (about 5 maxima) with α 41.2° (r2/h1=0.375; h1=h3=h4; rl/h=1.250). It appears that the larger α, i.e. the broader the collimator 30 (with the same values for d3 (2.8 mm), h3 and x), the broader the light beam.

Figure 6 depicts the flux fraction at the front (triangle) (i.e. top face 22), at the sides (crosses) (i.e. edge or edges 27) and at the back (circles) of the LED tile (i.e. an embodiment of device 1) as a function of the angle α (cone angle; see below). This flux fraction can be tuned advantageously by tuning the above-mentioned parameters.

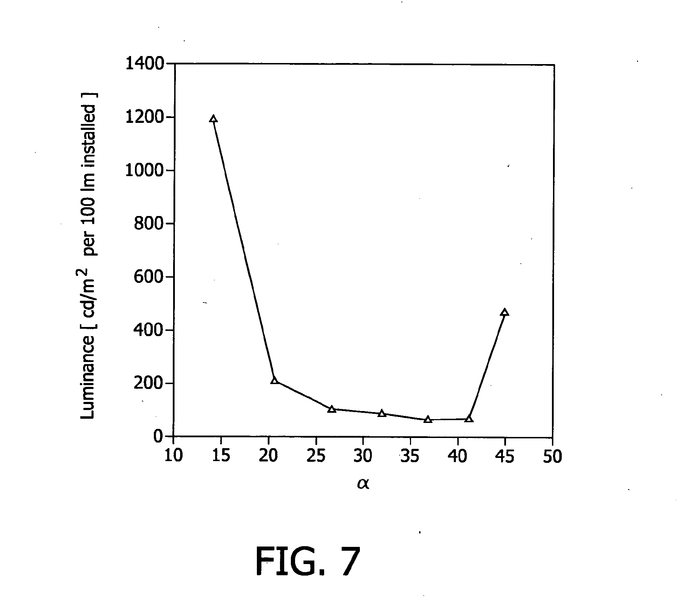

Figure 7 depicts the luminance (cd/m² per 100 lm installed) as a function of the angle α.

### Example 2:

A characteristic example of a light tile as shown in Figure 4a is described below.

A number of lighting devices (a complete luminaire) were made with r1/h1=1.125, r2/h1=0.375, d3/h1=0.35 and α=36.9°. Recess 35 has a cylindrical shape and slit 38 is a straight slit with a constant width w1 (approximately 100 µm). Top LEDs were used (blue LED +YAG:Ce), with a diameter of 2.6 mm of the emitting surface; the height h1=h3(h2)=h4=h5= 8 mm. The pitch of the LEDs, i.e. the distance between the centers of one LED to the next was 25 mm (square arrangement). Each device (i.e. each tile) comprised 4*8 LEDs + collimators; each tile had dimensions of 100*200 mm². A luminaire of 6 tiles in series (long sides next to each other) produced 1492 lm.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A lighting device (1) comprising at least one LED (10) and at least one structure (20) comprising the at least one LED (10), wherein:
a. the structure (20) has a front face (22) and a back face (26);
b. the structure (20) further comprises a recess (35) arranged to provide an opening (37) in the front face (22), the recess (35) having a recess bottom (36) and a recess height (h3), the recess (35) further being arranged to include the LED (10);
c. the LED (10) is located at the recess bottom (36) of the recess (35) and arranged to emit light through the opening (37) in the front face (22); and **characterized in that** the structure (20) further comprises a slit (38) circumferentially surrounding the recess (35) and providing a truncated conelike element (30) with an edge (34), wherein the radius (r) of the truncated conelike element (30) is arranged to increase in the direction from the LED (10) to the front face (22), and wherein the truncated conelike element (30) comprises a transparent material.

2. The lighting device (1) according to claim 1, wherein the edge (34) is a straight edge having an angle α relative to a normal to the front face (22), and wherein the angle α relative to said normal is in the range of 15 to 45°.

3. The lighting device (1) according to any one of the preceding claims, arranged to provide a luminance of ≤ 1000 cd/m² at γ ≥ 65° relative to a normal to the front face (22), preferably at γ ≥ 60°.

4. The lighting device (1) according to any one of the preceding claims, wherein the recess (35) has a recess diameter (d3), and the truncated conelike element (30) has a cone height h1, wherein h3=h1 and 0<d3/h1≤1.

5. The lighting device (1) according to claim 4, wherein the truncated conelike element (30) has a smallest radius (r2) at a top face (33) and a largest ratio (r1) at a bottom face (32) and a collimator height (h1), wherein 0<r2/h1≤2 and 0<r1/h≤8.

6. The lighting device (1) according to claims 4 and 5, wherein 0<d3/h1≤0.5, 0<r2/h1≤1 and 0<r1/h≤2.

7. The lighting device (1) according to any one of the preceding claims, wherein the edge (34) of the truncated conelike element (30) comprises an anti-reflex coating.

8. The lighting device (1) according to any one of the preceding claims, wherein the device (1) comprises a main body (200) and a carrier (50), the main body (200) and carrier (50) comprise the at least one structure (20), the carrier (50) is arranged to carry the LED (10), and the main body (200) comprises the truncated conelike element (30).

9. The lighting device (1) according to claim 8, wherein the main body (200) consists of a substantially transparent material.

10. The lighting device (1) according to any one of claims 8 and 9, wherein the carrier (50) consists of a substantially transparent material.

11. The lighting device (1) according to any one of claims 8 to 10, comprising the truncated conelike element (30) as separate body (300), wherein:
a. the truncated conelike body (300) comprises a bottom surface (32), a top surface (33) and edge (34), the truncated conelike body (300) further comprises a hole (135) extending from the top surface (33) to the bottom surface (32), the hole (135) being arranged to include the LED (10);
b. the main body (200) comprises at least one collimator recess (25) arranged to provide an opening (23) in the front face (22), the collimator recess (25) having a collimator recess bottom (28) and a height (h5) and being arranged to receive the truncated conelike body (300);
c. the LED (10) is located at the collimator recess bottom (28) and arranged to emit light through the hole (135); and
d. the lighting device (1) is obtainable by arranging the truncated conelike body (300) in the collimator recess (25) in the main body (200) in a male-female configuration.

12. The lighting device (1) according to any one of claims 8 to 10, further comprising a second body (500), wherein:
a. the second body (500) comprises a cover (540) with a front face (522) and a back face (526), the cover (540) being arranged to cover at least part of the main body (200), the second body (500) further comprising a protruding truncated conelike element (30) with an edge (34) and a top surface (33), the cover (540) having a hole (535) extending from the front face (522) of the cover (540) to the top surface (33) of the protruding truncated conelike element (30), the hole (535) being arranged to include the LED (10);
b. the main body (200) comprises a collimator recess (25) arranged to provide an opening (23) in the front face (22), the collimator recess (25) having a collimator recess bottom (28) and a recess height (h5) and being arranged to receive the protruding truncated conelike element (30);
c. the LED (10) is located at the recess bottom (28) of the collimator recess (25) and arranged to emit light through the hole (535); and
d. the lighting device (1) is obtainable by arranging the second body (500), comprising the protruding truncated conelike element (30), and the main body (200), comprising the collimator recess (25), in a male-female configuration.

13. The lighting device (1) according to claim 12, wherein the second body (500) consists of a substantially transparent material.

14. The lighting device (1) according to any one of the preceding claims, comprising a plurality of structures (20).

## Patentansprüche

1. Beleuchtungsvorrichtung (1) mit mindestens einer LED (10) und mindestens einer Anordnung (20), welche die mindestens eine LED (10) umfasst, wobei
a. die Anordnung (20) eine vordere Seite (22) und eine hintere Seite (26) aufweist;
b. die Anordnung (20) weiterhin eine Ausnehmung (35) umfasst, die so angeordnet ist, dass eine Öffnung (37) auf der vorderen Seite (22) vorgesehen wird, wobei die Ausnehmung (35) einen untersten Teil (36) und eine Ausnehmungshöhe (h3) aufweist, und wobei die Ausnehmung (35) weiterhin zur Aufnahme der LED (10) angeordnet ist;
c. die LED (10) in dem untersten Teil (36) der Ausnehmung (35) positioniert und angeordnet ist, um Licht durch die Öffnung (37) auf der vorderen Seite (22) zu emittieren, **dadurch gekennzeichnet, dass** die Anordnung (20) weiterhin einen Schlitz (38) umfasst, der die Ausnehmung (35) umlaufend umgibt, und ein kegelstumpfförmiges, konusartiges Element (30) mit einem Rand (34) vorsieht, wobei der Radius (r) des kegelstumpfförmigen, konusartigen Elements (30) so angeordnet ist, dass er in der Richtung von der LED (10) zu der vorderen Seite (22) zunimmt, und wobei das kegelstumpfförmige, konusartige Element (30) ein transparentes Material umfasst.

2. Beleuchtungsvorrichtung (1) nach Anspruch 1, wobei der Rand (34) ein gerader Rand mit einem Winkel α relativ zu einer Senkrechten zu der vorderen Seite (22) ist, und wobei der Winkel α relativ zu der Senkrechten im Bereich von 15 bis 45° liegt.

3. Beleuchtungsvorrichtung (1) nach einem der vorangegangenen Ansprüche, die so angeordnet ist, dass sie eine Luminanz von ≤ 1000 cd/m² bei γ ≥ 65°, vorzugsweise bei γ ≥ 60°, relativ zu einer Senkrechten zu der vorderen Seite (22) vorsieht.

4. Beleuchtungsvorrichtung (1) nach einem der vorangegangenen Ansprüche, wobei die Ausnehmung (35) einen Ausnehmungsdurchmesser (d3) aufweist und das kegelstumpfförmige, konusartige Element (30) eine Konushöhe h1 hat, wobei h3 = h1 und 0 < d3/h1 ≤ 1.

5. Beleuchtungsvorrichtung (1) nach Anspruch 4, wobei das kegelstumpfförmige, konusartige Element (30) einen kleinsten Radius (r2) auf einer oberen Seite (33) und einen größten Radius (r1) auf einer unteren Seite (32) sowie eine Kollimatorhöhe (h1) aufweist, wobei 0 < r2/h1 ≤ 2 und 0 < r1/h ≤ 8.

6. Beleuchtungsvorrichtung (1) nach den Ansprüchen 4 und 5, wobei 0 < d3/h1 ≤ 0,5, 0 < r2/h1 ≤ 1 und 0 < r1/h ≤ 2.

7. Beleuchtungsvorrichtung (1) nach einem der vorangegangenen Ansprüche, wobei der Rand (34) des kegelstumpfförmigen, konusartigen Elements (30) eine Antireflex-Beschichtung umfasst.

8. Beleuchtungsvorrichtung (1) nach einem der vorangegangenen Ansprüche, wobei die Vorrichtung (1) einen Hauptkörper (200) und einen Träger (50) umfasst, wobei der Hauptkörper (200) und der Träger (50) die mindestens eine Anordnung (20) umfassen, wobei der Träger (50) so angeordnet ist, dass er die LED (10) trägt, und der Hauptkörper (200) das kegelstumpfförmige, konusartige Element (30) umfasst.

9. Beleuchtungsvorrichtung (1) nach Anspruch 8, wobei der Hauptkörper (200) aus einem im Wesentlichen transparenten Material besteht.

10. Beleuchtungsvorrichtung (1) nach einem der Ansprüche 8 und 9, wobei der Träger (50) aus einem im Wesentlichen transparenten Material besteht.

11. Beleuchtungsvorrichtung (1) nach einem der Ansprüche 8 bis 10, welche das kegelstumpfförmige, konusartige Element (30) als separaten Körper (300) umfasst, wobei
a. der kegelstumpfförmige, konusartige Körper (300) eine untere Seite (32), eine obere Seite (33) und einen Rand (34) umfasst, wobei der kegelstumpfförmige, konusartige Körper (300) weiterhin eine Öffnung (135) umfasst, die sich von der oberen Seite (33) zu der unteren Seite (32) erstreckt, wobei die Öffnung (135) so angeordnet ist, dass sie die LED (10) aufnimmt;
b. der Hauptkörper (200) mindestens eine Kollimatorausnehmung (25) umfasst, die so angeordnet ist, dass sie eine Öffnung (23) in der vorderen Seite (22) vorsieht, wobei die Kollimatorausnehmung (25) einen untersten Teil (28) und eine Höhe (h5) aufweist und so angeordnet ist, dass sie den kegelstumpfförmigen, konusartigen Körper (300) aufnimmt;
c. die LED (10) in dem untersten Teil (28) der Kollimatorausnehmung positioniert und so angeordnet ist, dass sie Licht durch die Öffnung (135) emittiert; und
d. die Beleuchtungsvorrichtung (1) vorgesehen werden kann, indem der kegelstumpfförmige, konusartige Körper (300) in der Kollimatorausnehmung (25) in dem Hauptkörper (200) in einer Male-Female-Konfiguration angeordnet wird.

12. Beleuchtungsvorrichtung (1) nach einem der Ansprüche 8 bis 10, die weiterhin einen zweiten Körper (500) umfasst, wobei:
a. der zweite Körper (500) eine Bedeckung (540) mit einer vorderen Seite (522) und einer hinteren Seite (526) umfasst, wobei die Bedeckung (540) so angeordnet ist, dass sie zumindest einen Teil des Hauptkörpers (200) bedeckt, wobei der zweite Körper (500) weiterhin ein vorstehendes, kegelstumpfförmiges, konusartiges Element (30) mit einem Rand (34) und einer oberen Seite (33) umfasst, wobei die Bedeckung (540) eine Öffnung (535) aufweist, die sich von der vorderen Seite (522) der Bedeckung (540) zu der oberen Seite (33) des vorstehenden, kegelstumpfförmigen, konusartigen Elements (30) erstreckt, wobei die Öffnung (535) so angeordnet ist, dass sie die LED (10) aufnimmt;
b. der Hauptkörper (200) eine Kollimatorausnehmung (25) umfasst, die so angeordnet ist, dass sie eine Öffnung (23) in der vorderen Seite (22) vorsieht, wobei die Kollimatorausnehmung (25) einen untersten Teil (28) und eine Ausnehmungshöhe (h5) aufweist und so angeordnet ist, dass sie das vorstehende, kegelstumpfförmige, konusartige Element (30) aufnimmt;
c. die LED (10) in dem untersten Teil (28) der Kollimatorausnehmung positioniert und so angeordnet ist, dass sie Licht durch die Öffnung (135) emittiert; und
d. die Beleuchtungsvorrichtung (1) vorgesehen werden kann, indem der zweite Körper (500), der das vorstehende, kegelstumpfförmige, konusartige Element (30) umfasst, und der Hauptkörper (200), der die Kollimatorausnehmung (25) umfasst, in einer Male-Female-Konfiguration angeordnet werden.

13. Beleuchtungsvorrichtung (1) nach Anspruch 12, wobei der zweite Körper (500) aus einem im Wesentlichen transparenten Material besteht.

14. Beleuchtungsvorrichtung (1) nach einem der vorangegangenen Ansprüche, die mehrere Anordnungen (20) umfasst.

## Revendications

1. Dispositif d'éclairage (1) comprenant au moins une DEL (10) et au moins une structure (20) comprenant la au moins une DEL (10), dans lequel :
a. la structure (20) comporte une face frontale (22) et une face arrière (26) ;
b. la structure (20) comprend également un encastrement (35) prévu pour fournir une ouverture (37) dans la face frontale (22), l'encastrement (35) comportant un fond d'encastrement (36) et une hauteur d'encastrement (h3), l'encastrement (35) étant également prévu pour comprendre la DEL (10) ;
c. la DEL (10) est située dans le fond de l'encastrement (36) de l'encastrement (35) et est prévue pour émettre de la lumière à travers l'ouverture (37) dans la face frontale (22) ; et **caractérisé en ce que** la structure (20) comprend également une fente (38) entourant circonférentiellement l'encastrement (35) et fournissant un élément en forme de cône tronqué (30) doté d'un bord (34), dans lequel le rayon (r) de l'élément en forme de cône tronqué (30) est prévu pour augmenter dans la direction de la DEL (10) jusqu'à la face frontale (22), et dans lequel l'élément en forme de cône tronqué (30) comprend un matériau transparent.

2. Dispositif d'éclairage (1) selon la revendication 1, dans lequel le bord (34) est un bord droit ayant un angle α par rapport à la normale de la face frontale (22), et dans lequel l'angle α par rapport à ladite normale est dans la plage de 15 à 45°.

3. Dispositif d'éclairage (1) selon l'une quelconque des revendications précédentes, prévu pour fournir une luminance ≤ 1000 cd/m² à γ ≥ 65° par rapport à la normale de la face frontale (22), de préférence à γ ≥ 60°.

4. Dispositif d'éclairage (1) selon l'une quelconque des revendications précédentes, dans lequel l'encastrement (35) a un diamètre d'encastrement (d3), et l'élément en forme de cône tronqué (30) a une hauteur de cône h1, dans lequel h3 = h1 et 0 < d3/h1 ≤ 1.

5. Dispositif d'éclairage (1) selon la revendication 4, dans lequel l'élément en forme de cône tronqué (30) a un rayon le plus petit (r2) sur une face supérieure (33) et un rapport le plus grand (r1) sur une face inférieure (32) et une hauteur de collimateur (h1), dans lequel 0 < r2/h1 ≤ 2 et 0 < r1/h ≤ 8.

6. Dispositif d'éclairage (1) selon les revendications 4 et 5, dans lequel 0 < d3/h1 v 0,5, 0 < r2/h1 ≤ 1 et 0 < r1/h ≤ 2.

7. Dispositif d'éclairage (1) selon l'une quelconque des revendications précédentes, dans lequel le bord (34) de l'élément en forme de cône tronqué (30) comprend un revêtement antiréfléchissant.

8. Dispositif d'éclairage (1) selon l'une quelconque des revendications précédentes, dans lequel le dispositif (1) comprend un corps principal (200) et un support (50), le corps principal (200) et le support (50) comprenant la au moins une structure (20), le support (50) étant disposé pour supporter la DEL (10), et le corps principal (200) comprenant l'élément en forme de cône tronqué (30).

9. Dispositif d'éclairage (1) selon la revendication 8, dans lequel le corps principal (200) est composé d'un matériau sensiblement transparent.

10. Dispositif d'éclairage (1) selon les revendications 8 et 9, dans lequel le support (50) est composé d'un matériau sensiblement transparent.

11. Dispositif d'éclairage (1) selon l'une quelconque des revendications 8 à 10, comprenant l'élément en forme de cône tronqué (30) comme un corps séparé (300), dans lequel :
a. l'élément en forme de cône tronqué (300) comprend une surface inférieure (32), une surface supérieure (33) et un bord (34), l'élément en forme de cône tronqué (300) comprenant également un trou (135) s'étendant depuis la surface supérieure (33) jusqu'à la surface inférieure (32), le trou (135) étend agencé pour comprendre la DEL (10) ;
b. le corps principal (200) comprend au moins un encastrement de collimateur (25) prévu pour fournir une ouverture (23) dans la face frontale (22), l'encastrement de collimateur (25) comprenant un fond d'encastrement de collimateur (28) et une hauteur (h5) et étant prévu pour recevoir le corps en forme de cône tronqué (300) ;
c. la DEL (10) est située dans le fond d'encastrement de collimateur (28) et elle est disposée pour émettre de la lumière à travers le trou (135) ; et
d. le dispositif d'éclairage (1) peut être obtenu en disposant le corps en forme de cône tronqué (300) dans l'encastrement de collimateur (25) dans le corps principal (200) dans une configuration mâle-femelle.

12. Dispositif d'éclairage (1) selon l'une quelconque des revendications 8 à 10, comprenant également un second corps (500), dans lequel :
a. le second corps (500) comprend un couvercle (540) doté d'une face frontale (522) et une face arrière (526), le couvercle (540) étant disposé pour couvrir au moins une partie du corps principal (200), le second corps (500) comprenant également un élément en forme de cône tronqué (30) saillant doté d'un bord (34) et d'une surface supérieure (33), le couvercle (540) comportant un trou (535) s'étendant depuis la face frontale (522) du couvercle (540) jusqu'à la surface supérieure (33) de l'élément en forme de cône tronqué (30) saillant, le trou (535) étant agencé pour comprendre la DEL (10) ;
b. le corps principal (200) comprend un encastrement de collimateur (25) disposé pour fournir une ouverture (23) dans la face frontale (22), l'encastrement de collimateur (25) comportant un fond d'encastrement de collimateur (28) et une hauteur d'encastrement (h5) et étant agencé pour recevoir l'élément en forme de cône tronqué (30) saillant ;
c. la DEL (10) est située dans le fond d'encastrement (28) de l'encastrement de collimateur (25) et est disposée pour émettre de la lumière à travers le trou (535) ; et
d. le dispositif d'éclairage (1) peut être obtenu en disposant le second corps (500), comprenant l'élément en forme de cône tronqué (30) saillant et le corps principal (200), comprenant l'encastrement de collimateur (25), dans une configuration mâle-femelle.

13. Dispositif d'éclairage (1) selon la revendication 12, dans lequel le second corps (500) est composé d'un matériau sensiblement transparent.

14. Dispositif d'éclairage (1) selon l'une quelconque des revendications précédentes, comprenant une pluralité de structures (20).
